# EUROPÄISCHE PATENTSCHRIFT

(11) **EP 1 122 684 B1**
(45) Veröffentlichungstag und Bekanntmachung des Hinweises auf die Patenterteilung: **23.01.2008**
(21) Anmeldenummer: 00127659.1
(22) Anmeldetag: 18.12.2000
(51) Int. Cl.: G06K 17/00, G06K 7/08

(54) **Funk-Identifikationssystem und -verfahren**
Radio-identification system and method
Système et procédé d'identification par ondes radio

(30) Priorität: 02.02.2000 DE 10004421
(43) Veröffentlichungstag der Anmeldung: 08.08.2001
(73) Patentinhaber: ROBERT BOSCH GMBH, 70442 Stuttgart (DE)
(72) Erfinder: Heuke, Dietmar, 70825 Korntal (DE); Heiser, Andre, 73257 Koengen (DE)

(56) Entgegenhaltungen:
- WO-A-99/48046
- GB-A- 1 354 947
- US-A- 3 772 691

## Beschreibung

Die vorliegende Erfindung betrifft ein Funk-Identifikationssystem, insbesondere zur Verwendung in einem automatisierten Transportsystem, mit einer Mehrzahl von ersten Signalübertragungseinrichtungen zum Erzeugen eines jeweiligen ersten elektromagnetischen Signals; und einer oder mehreren Datenträgereinrichtungen zum Aussenden darauf gespeicherter Daten über ein zweites elektromagnetisches Signal ansprechend auf den Empfang des ersten elektromagnetischen Signals mittels einer jeweiligen zweiten Signalübertragungseinrichtung sowie ein entsprechendes Funk-Identifikationsverfahren.

Obwohl auf beliebige Funk-Identifikationssysteme anwendbar, werden die vorliegende Erfindung sowie die ihr zugrundeliegende Problematik in bezug auf ein an einer automatisierten Fertigungsanlage installiertes Funk-Identifikationssystem erläutert.

### STAND DER TECHNIK

Aus WO 99/48046 ist eine Anlage zur automatischen Erfassung von Golfbällen auf einem Golfplatz bekannt. Die Golfbälle enthalten jeweils einen RFID-Transponder, der von entsprechenden Lesegeräten im Loch und bei der Ball-Ausgabe abgefragt wird. Dabei ist eine Erkennung der Golfbälle ebenso möglich wie die Identifikation des Lesegerätes, das einen Ball erkannt hat.

Aus GB 1 354 947 ist ein System zur Identifikation von Autos auf einer Straße bekannt. Die Fahrzeuge enthalten jeweils einen Transponder, der per Funk mit Lesegeräten am Straßenrand in Verbindung steht. Die Lesegeräte in den Funkbaken können so die Fahrzeuge identifizieren, die auf der Straße fahren.

Aus US 3,772,691 ist ebenfalls ein Fahrzeugs-Identifikationsverfahren bekannt, wobei sich die Basisstation (in der Fahrbahn) und das Fahrzeug gegenseitig identifizieren. Das Fahrzeug speichert, über welche Funkbake es zuletzt gefahren ist. Dies geschieht entweder über einen einfachen optischen Strichcode auf der Fahrbahn oder über einen "magnetischen Strichcode", bei dem mehrere Spulen, die jeweils bestimmte codierte Funkfrequenzen abstrahlen, hintereinander in der Fahrbahn verlegt sind. Die Angabe kann im Fahrzeug zur Navigation auf einer elektronischen Karte verarbeitet werden.

Moderne Fertigungssysteme weisen üblicherweise ein automatisiertes Transportsystem zum Transport von Gegenständen entlang eines Transportweges auf. Funk-Identifikationssysteme werden dabei zur Identifikation der einzelnen zu transportierenden Gegenstände verwendet. Bekannte Funk-Identifikationssysteme sind sogenannte RFID-Systeme (RFID = Radiofrequenzidentifikation) und bestehen im allgemeinen aus einer Abfrageeinrichtung, auch Interrogator genannt und einer am jeweiligen Gegenstand angebrachten Datenträgereinrichter, auch Transponder genannt.

Der Datenträger speichert jeweilige Nutzdaten des betreffenden Gegenstandes, welche unter Verwendung einer Antenne von der Abfrageeinrichtung aus vom Datenträger gelesen bzw. auf den Datenträger geschrieben werden können. Zum Zeitpunkt dieser Kommunikation besteht eine ortsgebundene Punkt-zu-Punkt-Verbindung zwischen dem Datenträger und der Antenne der Abfrageeinrichtung, daß heißt es kann sich immer nur ein Datenträger vor einer Antenne befinden. Dadurch ist es möglich, die aktuelle Position des jeweiligen Datenträgers auf dem Transportweg der Fertigungsanlage festzustellen.

Als nachteilhaft bei diesem bekannten Ansatz hat sich herausgestellt, daß eine separate Antenne für jeden Abfrageort vorgesehen sein muß, die die gesamte Elektronik für den Datenaustausch mit dem Datenträger enthalten muß. Für jede Antenne ist außerdem ein separater Anschluß für die Kommunikation mit einem Host-Rechner (Personal Computer, o.ä.) vorzusehen. Dies geschieht üblicherweise durch eine Festverdrahtung. Da für jede gewünschte Kommunikationsposition in der Fertigungsanlage eine Abfrageeinrichtung mit einer Antenne notwendig ist, besitzen typische Fertigungsanlagen eine große Anzahl solcher Abfrageeinrichtungen mit Antennen. Dies schafft Anschluß-, Platz- und Kostenprobleme.

Bekannt sind ebenfalls Funk-Bus-Systeme, wie z.B. Blue Tooth. Der entscheidende Nachteil beim Einsatz von Funk-Bus-Systemen besteht darin, daß die aktuelle Position eines Datenträgers nicht bekannt ist. Er kann innerhalb der Funk-Reichweite praktisch überall sein. Für den Einsatz in der Automationstechnik ist es aber entscheidend, Informationen des Datenträgers an einer ganz bestimmten Position des Systems auszuwerten und darauf zu reagieren. Genau aus diesem Grund besitzen herkömmliche Systeme in der Regel eine Antenne mit sehr beschränkter Reichweite. So wird sichergestellt, daß Datenträger-Informationen an ganz bestimmten Punkten zur Verfügung stehen. Dies hat natürlich den Nachteil, daß die Information eben nur dort gelesen und geschrieben werden können und bei größeren Datenmengen allein daraus erhebliche Staus im Fertigungsfluß in Kauf genommen werden müssen. Die daraus resultierenden Taktzeitprobleme komplexer Fließfertigungssysteme machen somit ein spezielles Anlagendesign erforderlich, was aber zumeist kostenintensiv ist.

Die WO 95/14938 offenbart ein System zur Objektlokalisierung, insbesondere zur Identifizierung von Fluggepäck. Bei dem bekannten System sendet eine Abfrageeinrichtung ein Abfragesignal an einen Datenträger und dieser überträgt daraufhin ein Antwortsignal an die Abfrageeinrichtung.

### VORTEILE DER ERFINDUNG

Die Erfindung wird durch die unabhängigen Ansprüche definiert. Die Erfindung weist gegenüber dem bekannten Lösungsansatz den Vorteil auf, daß eine Reduzierung der Anzahl der erforderlichen Antennen in dem System, zum Beispiel in der Fertigungsanlage, möglich ist.

Dazu kommt eine Vereinfachung der Elektrokonstruktion durch Einsparung von Kabeln, Steckverbindern usw. Der Datenträger ist in der Lage, an einer beliebigen Position zu kommunizieren, wobei die Position der Antenne der zentralen Datenverarbeitungseinheit keinen Einfluß auf die Kommunikationsfähigkeit des Datenträgers hat (unter Einhaltung der zulässigen Übertragungsreichweite). Die Position des Datenträgers im System kann hinreichend genau bestimmt werden.

Die der vorliegenden Erfindung zugrundeliegende Idee besteht darin, daß die ersten Signalübertragungseinrichtungen derart gestaltet sind, daß sie ein individuelles erstes elektromagnetisches Signal erzeugen, und die Datenträgereinrichtungen derart gestaltet sind, daß sie in Abhängigkeit vom empfangenen individuellen ersten elektromagnetischen Signal ein entsprechendes individuelles zweites elektromagnetisches Signal zur Identifikation der jeweiligen das erste elektromagnetische Signal erzeugenden ersten Signalübertragungseinrichtung aussenden.

Dies ermöglicht einen Datenaustausch einer zentralen Datenverarbeitungseinrichtung mit einer einzigen Antenne mit mehreren Datenträgern bei gleichzeitiger Positionsbestimmung dieser Datenträger.

In den Unteransprüchen finden sich vorteilhafte Weiterbildungen und Verbesserungen der Erfindung.

Gemäß einer bevorzugten Weiterbildung weisen die ersten Signalübertragungseinrichtungen eine erste Signalreichweite auf und weisen die zweiten Signalübertragungseinrichtungen eine zweite Signalreichweite auf, wobei die zweite Signalreichweite wesentlich größer als die erste Signalreichweite ist. Dies hat den Vorteil, daß eine zentrale Datenverarbeitungseinrichtung vorgesehen sein kann, welche mit allen Datenträgern kommuniziert.

Gemäß einer weiteren bevorzugten Weiterbildung ist eine zentrale Datenverarbeitungseinrichtung zum Empfangen der ausgesendeten individuellen zweiten elektromagnetischen Signale vorgesehen.

Gemäß einer weiteren bevorzugten Weiterbildung sind die ersten Signalübertragungseinrichtungen derart gestaltet, daß sie ein individuell moduliertes Hochfrequenzsignal als das erste elektromagnetische Signal erzeugen. Dies ist eine bewährte und zuverlässige Art zur Erzeugung einer Kennung. Gemäß einer weiteren bevorzugten Weiterbildung sind die ersten Signalübertragungseinrichtungen derart gestaltet, daß das individuelle erste elektromagnetische Signal einstellbar ist. Dies schafft erhöhte Flexibilität.

Gemäß einer weiteren bevorzugten Weiterbildung sind die Datenträgereinrichtungen derart gestaltet, daß sie das empfangene erste elektromagnetische Signal demodulieren und das Ergebnis der zentralen Datenverarbeitungseinrichtung mitteilen. Die zentrale Datenverarbeitungseinrichtung hat eine Zuordnungseinrichtung zum Zuordnen einer Datenträgereinrichtung zum Ergebnis der Demodulation.

Gemäß einer weiteren bevorzugten Weiterbildung sind die ersten Signalübertragungseinrichtungen Induktivgeber und/oder.die zweiten Signalübertragungseinrichtungen Blue-Tooth-Funknetzeinrichtungen.

Gemäß einer weiteren bevorzugten Weiterbildung kann die zentrale Datenverarbeitungseinrichtung mit den zweiten Signalübertragungseinrichtungen simultan kommunizieren.

### ZEICHNUNGEN

Ein Ausführungsbeispiel der Erfindung ist in den Zeichnungen dargestellt und in der nachfolgenden Beschreibung näher erläutert.

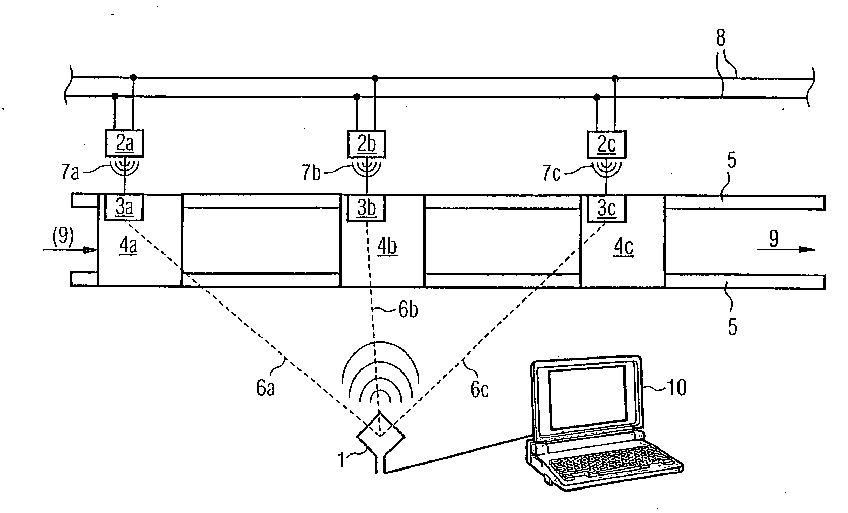

- Fig. 1: zeigt ein schematisches Diagramm eines Ausführungsbeispiels des Funk-Identifikationssystems nach der vorliegenden Erfindung.

### BESCHREIBUNG DER AUSFÜHRUNGSBEISPIELE

In Fig. 1 bezeichnen 1 eine Funkantenne, 2a-c Spannungsübertrager mit einer Positionskennungs-Modulationsfunktion, 3a-c Datenträger, 4a-c Werkstückträger, 5 eine Fließbandstrecke, 6a-c Nutzdaten-Funkübertragungsstrecken zwischen einem jeweiligen Datenträger 3a-c und der Funkantenne, 7a-c Spannungsversorgungs-Funkübertragungsstrecken, 8 eine Spannungsversorgung für den jeweiligen Spannungsübertrager, 9 die Laufrichtung vom Fließband und 10 einen Hostrechner, der mit der Funkantenne 1 verbunden ist.

Bei dieser Ausführungsform sind die ersten Signalübertragungseinrichtungen 2a-c in Form von induktiven Spannungsübertragern gestaltet, die ein individuelles erstes elektromagnetisches Signal 7a-c erzeugen, welches ein individuell moduliertes Hochfrequenzsignal ist. Die Spannungsübertrager 2a-c, welche an den gewünschten Abfrageorten installiert sind, modulieren also eine jeweilige Kennung auf das HF-Feld 7a-c, welche eine räumliche Zuordnung gestattet.

Das Fließband bewegt die auf den Werkstückträger befindlichen Datenträger 3a-c an den Spannungsübertragern 2a-c vorbei.

Die Datenträger 3a-c demodulieren diese Kennung der Spannungsübertrager 2a-c, wenn sie in die verhältnismäßig geringe Reichweite der Spannungsübertrager 2a-c gelangen und melden die Kennung zusammen mit den auszulesenen Daten über die Antenne 1 an den Host-Rechner 10 über den verwendeten Blue Tooth-Funkbus mit wesentlich größerer Reichweite als derjenigen der Spannungsübertrager 2a-c. Die Datenträger 3a-c weisen dazu jeweils eine zweite Signalübertragungseinrichtung zum Aussenden darauf gespeicherter Daten über ein Funksignal 6a-c ansprechend auf den Empfang des ersten elektromagnetischen Signals 7a-c, also des Hochfrequenzsignals mit der Ortskennung, auf.

Der Host-Rechner 10 kann diese Informationen über die Kennung zur Ermittlung der gegenwärtigen Position des betreffenden Datenträgers 3a-c in der Fertigungsanlage verwenden. Mit anderen Worten hat der Host-Rechner 10 eine Zuordnungseinrichtung zum Zuordnen einer Datenträgereinrichtung 3a-c zum Ergebnis der Demodulation.

Die erwähnte Kennung wird am jeweiligen Spannungsübertrager 2a-c vor Inbetriebnahme eingestellt und solle einmalig innerhalb der Fertigungsanlage vergeben werden.

Der illustrierte Aufbau ermöglich, daß die zentrale Datenverarbeitungseinrichtung in Form des Host-Rechners 10 mit den zweiten Signalübertragungseinrichtungen der Datenträger 3a-c simultan kommunizieren kann, also diese auslesen bzw. programmieren kann.

Die Verwendung eines geeigneten schnellen Funkbusses mit Full-Duplex, hier dem Blue Tooth, an Stelle der RFID-Technologie bewirkt, daß jeder Datenträger nahezu ortsunabhängig innerhalb der Rechweite direkt über den Funkbus angesprochen werden kann.

Da mehrere Datenträger 3a-c gleichzeitig mit einer einzigen Antenne kommunizieren können, ergibt sich eine wesentliche Vereinfachung der Hardware.

An den Kommunikationsstellen der Fertigungsanlage wird der Datenträger 3a-c lediglich induktiv mit Spannung über den jeweiligen Spannungsübertrager 2a-c versorgt. Vorteile gegenüber der üblichen Antenne sind hier besonders der einfache Aufbau und die einfache Anschließbarkeit der Spannungsübertrager 2a-c, denn er benötigt lediglich zwei Spannungsleitungen 8 und keine Informationsübertragungsstrecke zum Host-Rechner 10.

Dies führt zu erheblichen Einsparungen bei der Elektroinstallation (Kabel, Stecker), Einsparungen in der Antennenkonstruktion, eine kostengünstige Möglichkeit zur Verfolgung von Werkstücken in der Anlage, weil lediglich an den Beobachtungspunkten Spannungsübertrager 2a-c zu installieren sind.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere sind die Einsatzmöglichkeiten des erfindungsgemäßen Funk-Identifikationssystems vielfältig und nicht auf Fertigungssysteme beschränkt.

Auch können andere Funksysteme als das beschriebene Induktivverfahren bzw. Blue-Tooth-System zum Einsatz kommen.

## Patentansprüche

1. Funk-Identifikationssystem mit:
einer Mehrzahl von ersten Signalübertragungseinrichtungen (2a-c) zum Erzeugen eines jeweiligen ersten elektromagnetischen Signals (7a-c); und
einer oder mehreren Datenträgereinrichtungen (3a-c) mit einer jeweiligen zweiten Signalübertragungseinrichtung zum Aussenden darauf gespeicherter Daten über ein zweites elektromagnetisches Signal (6a-c) ausgelöst von dem Empfang des ersten elektromagnetischen Signals (7a-c)
wobei eine Empfangsantenne (1) vorgesehen ist,
**dadurch gekennzeichnet, dass**
das erste elektromagnetische Signal (7a-c) eine für die erste Signalübertragungseinrichtung (2a-c) individuelle Kennung enthält, die zusammen mit den gespeicherten Daten im zweiten elektromagnetischen Signal (6a-c) enthalten ist,
wobei die Reichweite der Empfangsantenne so gewählt ist, dass sie die zweiten elektromagnetischen Signale(6a-c)von Datenträgereinrichtungen (3a-c), die sich in Signalaustauschverbindung mit verschiedenen ersten Signalübertragungseinrichtungen (2a-c) befinden, empfangen kann.

2. Funk-Identifikationssystem nach Anspruch 1, **dadurch gekennzeichnet, dass** die ersten Signalübertragungseinrichtungen (2a-c) eine erste Signalreichweite aufweisen und die zweiten Signalübertragungseinrichtungen eine zweite Signalreichweite aufweisen, wobei die zweite Signalreichweite wesentlich größer als die erste Signalreichweite ist.

3. Funk-Identifikationssystem nach Anspruch 1 oder 2, **dadurch gekennzeichnet, dass** eine zentrale Datenverarbeitungseinrichtung (1; 10) zum Empfangen der ausgesendeten zweiten elektromagnetischen Signale (6a-c) vorgesehen ist.

4. Funk-Identifikationssystem nach Anspruch 1, 2 oder 3, **dadurch gekennzeichnet, dass** die ersten Signalübertragungseinrichtungen (2a-c) derart gestaltet sind, dass sie ein moduliertes Hochfrequenzsignal als das erste elektromagnetische Signal (7a-c) erzeugen.

5. Funk-Identifikationssystem nach Anspruch 1, 2, 3 oder 4, **dadurch gekennzeichnet, dass** die ersten Signalübertragungseinrichtungen (2a-c) derart gestaltet sind, dass die Kennung einstellbar ist.

6. Funk-Identifikationssystem nach Anspruch 4 in Verbindung mit Anspruch 3, **dadurch gekennzeichnet, dass** die Datenträgereinrichtungen (3a-c) derart gestaltet sind, dass sie das empfangene erste elektromagnetische Signal (7a-c) demodulieren und das Ergebnis der zentralen Datenverarbeitungseinrichtung (1; 10) mitteilen; und die zentrale Datenverarbeitungseinrichtung (1; 10) eine Zuordnungseinrichtung zum Zuordnen einer Datenträgereinrichtung (3a-c) zum Ergebnis der Demodulation aufweist.

7. Funk-Identifikationssystem nach einem der vorhergehenden Ansprüche, **dadurch gekennzeichnet, dass** die ersten Signalübertragungseinrichtungen (2a-c) Induktivgeber und/oder die zweiten Signalübertragungseinrichtungen Blue-Tooth-Funknetzeinrichtungen sind.

8. Funk-Identifikationssystem nach Anspruch 3, **dadurch gekennzeichnet, dass** die zentrale Datenverarbeitungseinrichtung (1; 10) mit den zweiten Signalübertragungseinrichtungen simultan kommunizieren kann.

9. Verfahren zum Betrieb eines Funk-Identifikationssystem,
wobei eine erste Signalübertragungseinrichtung (2a-c) ein erstes elektromagnetisches Signal (7a-c) aussendet;
und wobei eine zweite Signalübertragungseinrichtung ausgelöst vom Empfang des ersten elektromagnetischen Signals (7a-c) ein zweites elektromagnetisches Signal (6a-c) aussendet,
**dadurch gekennzeichnet, dass**
das erste elektromagnetische Signal (7a-c) eine für die erste Signalübertragungseinrichtung (2a-c) individuelle Kennung enthält, die zusammen mit den gespeichert Daten im zweiten elektromagnetischen Signal (6a-c) enthalten ist,
wobei die Reichweite einer Empfangsantenne so gewählt ist, dass sie die zweiten elektromagnetischen Signale(6a-c)von Datenträgereinrichtungen (3a-c), die sich in Signalaustauschverbindung mit verschiedenen ersten Signalübertragungseinrichtungen (2a-c) befinden, empfangen kann.

10. Verfahren nach Anspruch 9, **dadurch gekennzeichnet, dass** eine zentrale Datenverarbeitungseinrichtung (1; 10) die ausgesendeten zweiten elektromagnetischen Signale (6a-c) empfängt und eine Zuordnung einer Datenträgereinrichtung (3a-c) zum jeweiligen empfangenen zweiten elektromagnetischen Signal (6a-c) trifft.

## Claims

1. Radio identification system having:
a plurality of first signal transmission devices (2a-c) for producing a respective first electromagnetic signal (7a-c); and
one or more data storage devices (3a-c) with a respective second signal transmission device for emitting data stored thereon via a second electromagnetic signal (6a-c), triggered by reception of the first electromagnetic signal (7a-c);
where a reception antenna (1) is provided,
**characterized in that**
the first electromagnetic signal (7a-c) contains an identifier which is individual to the first signal transmission device (2a-c) and which is contained together with the stored data in the second electromagnetic signal (6a-c),
the range of the reception antenna being chosen such that it can receive the second electromagnetic signals (6a-c) from data storage devices (3a-c) which have a signal interchange connection to various first signal transmission devices (2a-c).

2. Radio identification system according to Claim 1, **characterized in that** the first signal transmission devices (2a-c) have a first signal range and the second signal transmission devices have a second signal range, the second signal range being much greater than the first signal range.

3. Radio identification system according to Claim 1 or 2, **characterized in that** a central data processing device (1; 10) is provided for receiving the emitted second electromagnetic signals (6a-c).

4. Radio identification system according to Claim 1, 2 or 3, **characterized in that** the first signal transmission devices (2a-c) are in a form such that they produce a modulated radio-frequency signal as the first electromagnetic signal (7a-c).

5. Radio identification system according to Claim 1, 2, 3 or 4, **characterized in that** the first signal transmission devices (2a-c) are in a form such that the identifier can be set.

6. Radio identification system according to Claim 4, in conjunction with Claim 3, **characterized in that** the data storage devices (3a-c) are in a form such that they demodulate the received first electromagnetic signal (7a-c) and communicate the result to the central data processing device (1; 10); and the central data processing device (1; 10) has an association device for associating a data storage device (3a-c) with the result of the demodulation.

7. Radio identification system according to one of the preceding claims, **characterized in that** the first signal transmission devices (2a-c) are inductive transmitters and/or the second signal transmission devices are Bluetooth radio network devices.

8. Radio identification system according to Claim 3, **characterized in that** the central data processing device (1; 10) can communicate with the second signal transmission devices simultaneously.

9. Method for the operation of a radio identification system,
where a first signal transmission device (2a-c) emits a first electromagnetic signal (7a-c);
and where a second signal transmission device emits a second electromagnetic signal (6a-c), triggered by the reception of the first electromagnetic signal (7a-c),
**characterized in that**
the first electromagnetic signal (7a-c) contains an identifier which is individual to the first signal transmission device (2a-c) and which is contained together with the stored data in the second electromagnetic signal (6a-c),
the range of a reception antenna being chosen such that it can receive the second electromagnetic signals (6a-c) from data storage devices (3a-c) which have a signal interchange connection to various first signal transmission devices (2a-c).

10. Method according to Claim 9, **characterized in that** a central data processing device (1; 10) receives the emitted second electromagnetic signals (6a-c) and makes an association between the data storage device (3a-c) and the respective received second electromagnetic signal (6a-c).

## Revendications

1. Système d'identification par ondes radio comprenant :
- une pluralité de premiers dispositifs de transmission du signal (2a-c) pour produire un premier signal électromagnétique respectif (7a-c), et
- un ou plusieurs dispositifs de support de données (3a-c) avec un deuxième dispositif respectif de transmission du signal pour émettre des données enregistrées sur celui-ci au moyen d'un deuxième signal électromagnétique (6a-c) déclenché par la réception du premier signal électromagnétique (7a-c) ; et
- une antenne de réception (1),
**caractérisé en ce que**
le premier signal électromagnétique (7a-c) contient une identification individuelle pour le premier dispositif de transmission du signal (2a-c), contenue avec les données enregistrées dans le deuxième signal électromagnétique (6a-c),
sachant que la portée de l'antenne de réception est choisie de manière à ce qu'elle puisse recevoir les deuxièmes signaux électromagnétiques (6a-c) de dispositifs de support de données (3a-c) qui se trouvent en liaison d'échange de signaux avec différents premiers dispositifs de transmission du signal (2a-c).

2. Système d'identification par ondes radio selon la revendication 1,
**caractérisé en ce que**
les premiers dispositifs de transmission du signal (2a-c) présentent une première portée du signal et les deuxièmes dispositifs de transmission du signal une deuxième portée du signal, sachant que la deuxième portée du signal est nettement plus grande que la première portée du signal.

3. Système d'identification par ondes radio selon la revendication 1 ou 2,
**caractérisé par**
un dispositif central de traitement des données (1 ; 10) pour la réception des deuxièmes signaux électromagnétiques (6a-c) émis.

4. Système d'identification par ondes radio selon la revendication 1, 2 ou 3,
**caractérisé en ce qu'**
on conçoit les premiers dispositifs de transmission du signal (2a-c) de telle façon qu'ils produisent un signal haute fréquence modulé en tant que le premier signal électromagnétique (7a-c).

5. Système d'identification par ondes radio selon la revendication 1, 2, 3 ou 4,
**caractérisé en ce qu'**
on conçoit les premiers dispositifs de transmission du signal (2a-c) de telle façon que l'identification est réglable.

6. Système d'identification par ondes radio selon la revendication 4 en liaison avec la revendication 3,
**caractérisé en ce qu'**
on conçoit les dispositifs de support de données (3a-c) de telle façon qu'ils démodulent le premier signal électromagnétique (7a-c) reçu et transmettent le résultat au dispositif central de traitement des données (1 ; 10), et le dispositif central de traitement des données (1 ; 10) comporte un dispositif d'affectation pour affecter un dispositif de support de données (3a-c) au résultat de la démodulation.

7. Système d'identification par ondes radio selon l'une des revendications précédentes,
**caractérisé en ce que**
les premiers dispositifs de transmission du signal (2a-c) sont des transmetteurs inductifs et/ou les deuxièmes dispositifs de transmission du signal des dispositifs de réseau radio Bluetooth.

8. Système d'identification par ondes radio selon la revendication 3,
**caractérisé en ce que**
le dispositif central de traitement des données (1 ; 10) peut communiquer en simultané avec les deuxièmes dispositifs de transmission du signal.

9. Procédé d'exploitation d'un système d'identification par ondes radio,
selon lequel un premier dispositif de transmission du signal (2a-c) émet un premier signal électromagnétique (7a-c) ;
et un deuxième dispositif de transmission du signal déclenché par la réception du premier signal électromagnétique (7a-c) émet un deuxième signal électromagnétique (6a-c),
**caractérisé en ce que**
le premier signal électromagnétique (7a-c) contient une identification individuelle pour le premier dispositif de transmission du signal (2a-c), contenue avec les données enregistrées dans le deuxième signal électromagnétique (6a-c), et
la portée d'une antenne de réception est choisie de manière à ce qu'elle puisse recevoir les deuxièmes signaux électromagnétiques (6a-c) de dispositifs de support de données (3a-c) qui se trouvent en liaison d'échange de signaux avec différents premiers dispositifs de transmission du signal (2a-c).

10. Procédé selon la revendication 9,
**caractérisé en ce qu'**
un dispositif central de traitement des données (1; 10) reçoit les deuxièmes signaux électromagnétiques (6a-c) émis et effectue une affectation d'un dispositif de support de données (3a-c) au deuxième signal électromagnétique (6a-c) respectif reçu.
